# FASCICULE DE BREVET EUROPEEN

(11) **EP 3 152 079 B1**
(45) Date de publication et mention de la délivrance du brevet: **11.10.2023**
(21) Numéro de dépôt: 15735725.2
(22) Date de dépôt: 26.05.2015
(51) Int. Cl.: B60K 35/00, B60R 11/00, B60R 11/02, G02F 1/1333, G06F 1/16, H05K 5/02, B60Q 3/00

(54) **DISPOSITIF D'AFFICHAGE DESTINÉ À L'HABITACLE D'UN VÉHICULE AUTOMOBILE**
FÜR EINEN KRAFTFAHRZEUGPASSAGIERRAUM BESTIMMTE ANZEIGEVORRICHTUNG
DISPLAY DEVICE INTENDED FOR A MOTOR VEHICLE PASSENGER COMPARTMENT

(30) Priorité: 27.05.2014 FR 1401217
(43) Date de publication de la demande: 12.04.2017
(73) Titulaire: Valeo Systemes Thermiques, 78320 Le Mesnil Saint Denis (FR)
(72) Inventeur: BERAUD, Henry, 78320 Le Mesnil Saint Denis (FR); BERNIER, Christophe, 78320 Le Mesnil Saint Denis (FR); TREUILLET, Sylvain, 78320 Le Mesnil Saint Denis (FR)
(74) Mandataire: Delplanque, Arnaud
(86) Numéro de dépôt international: PCT/FR2015/051381
(87) Numéro de publication internationale: WO 2015/181487

(56) Documents cités:
- WO-A1-2011/154626
- WO-A1-2012/131188
- WO-A1-2014/065601
- JP-A- 2013 167 757
- US-B1- 6 532 152

## Description

La présente invention concerne un dispositif d'affichage destiné à l'habitacle d'un véhicule automobile ainsi qu'à une planche de bord d'un véhicule comprenant un tel dispositif d'affichage.

Les véhicules automobiles comprennent de plus en plus de fonctions variées que le conducteur et le passager sont amenés à contrôler. Pour contrôler ces fonctions ou fournir un affichage au conducteur et au passager, de plus en plus de véhicules automobiles sont équipés de dispositifs d'affichage. Ces dispositifs d'affichage peuvent comporter seulement un écran plat, ou encore, une dalle tactile de commande associée à cet écran plat.

Ces dispositifs d'affichage présentent des contraintes liées à leur utilisation dans des véhicules automobiles, entre autres, le besoin d'une forte luminosité afin de rester visibles et ce malgré un éclairage direct. Le dispositif d'affichage doit, en outre, être solidement fixé à l'habitacle du véhicule afin de ne pas se déplacer sous l'effet des vibrations du véhicule automobile, et par ainsi réduire la qualité de l'affichage. Ces différentes contraintes font que les dispositifs d'affichage destinés à l'habitacle d'un véhicule automobile sont généralement plus lourds que les dispositifs d'affichage destinés à d'autres applications (de même taille) et sont fixés par des moyens de fixation spécifiques.

Pour des raisons esthétiques et ergonomiques, il est de plus en plus demandé à ce que la surface du dispositif d'affichage en vis-à-vis d'un utilisateur affleure la surface de la façade du tableau de commande et d'affichage. On parle également d'un afficheur « flushy », mot anglais pour désigner que la surface du dispositif d'affichage est en alignement avec la façade.

Ce souhait d'ergonomie pose un certain nombre de problèmes techniques, en particulier au niveau des jeux des divers éléments d'assemblage. En effet, un jeu de plus de 1 millimètre peut devenir inconfortable, un jeu de 0,3 à 0,5 mm se ressent déjà tactilement comme une marche et est disgracieux, et un écart entre un écran de protection et l'affichage peut engendrer une perte de qualité de l'image.

Au vu de la dispersion des dimensions mécaniques des pièces et des tolérances de fabrication, en particulier du boîtier de fixation généralement réalisé en matière plastique, la position exacte de la surface de l'écran plat par rapport à un référentiel de la façade est difficile à maîtriser.

La présente invention vise à pallier les inconvénients mentionnés ci-dessus, en particulier en fournissant un dispositif d'affichage permettant un ajustement précis de l'altitude précis, contrôlé et réglé en continu en profondeur malgré les tolérances de fabrication et d'empilage des différents éléments.

A cet effet, la présente invention a pour objet un dispositif d'affichage pour véhicule automobile comprenant les caractéristiques de la revendication 1.

Avantageusement, la configuration des moyens de fixation avec le boîtier de fixation permet de régler avec précision la cote entre les premier et deuxième points de référence, ce qui permet d'assurer une meilleure ergonomie et/ou qualité d'affichage. De plus, le dispositif d'affichage selon l'invention permet de réduire les contraintes internes dans le dispositif d'affichage.

Le dispositif d'affichage selon l'invention peut également comprendre une ou plusieurs des caractéristiques ci-dessous, considérées individuellement ou selon toutes les combinaisons techniquement possibles :
- l'écran d'affichage est de type cristaux liquides, par exemple de type TFT, LCD, VFD ou autres technologies OLED ; et/ou
- l'écran d'affichage comprend en outre au moins trois plots de maintien et les moyens élastiques sont disposés entre l'écran d'affichage et le boîtier au niveau des plots de maintien ; et/ou
- les moyens de fixation coopèrent avec les plots de maintien au moyen d'au moins un élément intermédiaire et les moyens élastiques sont disposés entre le au moins un élément intermédiaire et le boîtier ; et/ou
- les moyens élastiques comprennent un cadre reliant entre eux lesdits moyens élastiques ; et/ou
- les moyens élastiques comprennent des plots élastomères et/ou des plots en silicone et/ou des ressorts de compression et/ou des rondelles élastiques métalliques et/ou des pattes élastiques métalliques ; et/ou
- les moyens de fixations sont des vis et/ou des cames et/ou de la colle ; et/ou
- l'écran d'affichage comprend un nombre défini de plots de maintien, typiquement entre 3 et 5 plots de maintien, par exemple 4 plots de maintien ; et/ou
- le dispositif d'affichage comprend en outre une plaque transparente pouvant servir pour apport tactile, protection, anti-rayure, anti-trace, décor encadrement et/ou effets optiques disposée devant l'écran d'affichage, disposée devant l'écran d'affichage.

L'invention se rapporte également à une planche de bord d'un véhicule automobile comprenant un dispositif d'affichage selon l'invention.

L'invention sera mieux comprise à la lumière de la description suivante qui n'est donnée qu'à titre indicatif et qui n'a pas pour but de limiter ladite invention, accompagnée des figures ci-dessous :
- La figure 1 illustre de façon schématique un dispositif d'affichage selon l'art antérieur,
- La figure 2 représente de façon schématique un dispositif d'affichage selon un premier mode de réalisation,
- La figure 3 représente de façon schématique les différents éléments d'un dispositif d'affichage selon un premier mode de réalisation,
- La figure 4a est un exemple de moyens élastiques selon un mode de réalisation de l'invention utilisant des plots élastiques,
- La figure 4b est un autre exemple de moyens élastiques selon un mode de réalisation de l'invention utilisant des pattes métalliques, et
- Les figures 5a à 5c représentent les différentes étapes de manière schématisée d'un procédé de fabrication d'un dispositif d'affichage selon l'invention.

Sur ces figures, les éléments identiques portent les mêmes numéros de référence.

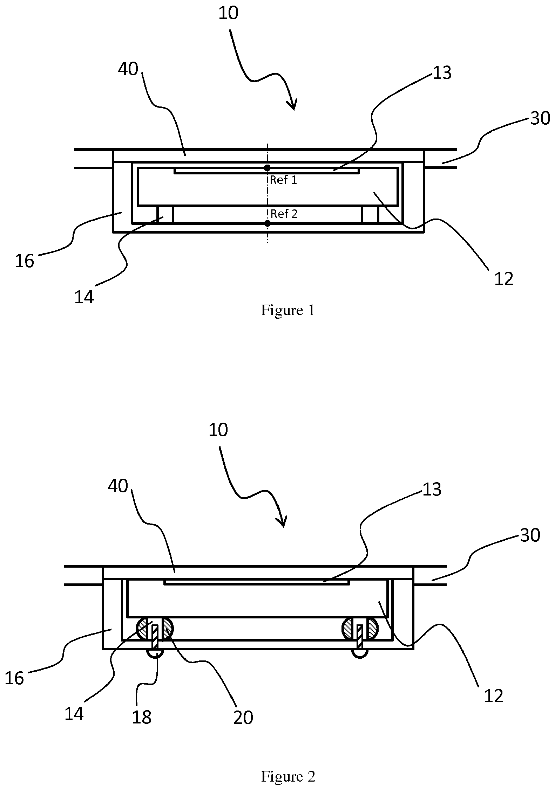

Comme illustré sur la figure 1, le dispositif d'affichage 10 destiné à l'habitacle d'un véhicule automobile selon l'art antérieur comprend un écran d'affichage 12. L'écran d'affichage 12 comprend en face arrière des plots de maintien 14 permettant une fixation à un boîtier 16. Le boitier 16 est destiné à être encastré dans l'habitacle à l'aide de moyens de fixation non représentés.

La surface d'affichage 13 de l'écran d'affichage 12 est encastrée dans un cadre enjoliveur console 30. La figure 1 présente le dispositif d'affichage 10 avec un vitrage décor 40 en appui sur le boîtier 16, comprenant un écart « e » entre la surface d'affichage 13 de l'écran d'affichage 12 et le vitrage décor 40. Ledit écart « e » est non nul et provient des jeux des différentes pièces du dispositif d'affichage 10.

Dans le dispositif d'affichage 10 selon l'art antérieur présenté sur la figure 1, l'écran d'affichage 12 n'est pas en surface finale du fait du vitrage 40. L'écart « e » présent entre l'affichage de l'écran d'affichage 12 et la façade avant de l'écran 13 est destiné à être réduit pour que l'image affichée sur l'écran d'affichage 12 apparaisse précise et nette, et ne paraisse pas trop en retrait, ou ne soit perturbée ou limitée par les bords intérieurs.

Un dispositif d'affichage selon un premier mode de réalisation de l'invention est présenté en figure 2.

Comme illustré en figure 2, le dispositif d'affichage 10 selon l'invention comprend au moins:
- un écran d'affichage 12,
- un boîtier de fixation 16, et
- des moyens de fixation 18.

L'écran d'affichage 12 comprend quatre plots de maintien 14 disposés au dos de l'écran d'affichage 12. L'écran d'affichage comprend en outre au moins un premier point de référence Ref 1.

Selon un mode réalisation, l'écran d'affichage 12 est de type à cristaux liquides, par exemple de type TFT, LCD, VFD ou autres technologies OLED.

Selon des variantes de l'invention, l'écran d'affichage comprend au moins trois plots de maintien 14 disposés au dos de l'écran d'affichage 12.

Le boîtier de fixation 16 comprend au moins un deuxième point de référence Ref 2.

Les moyens de fixation permettent, lorsqu'ils sont en prise avec les plots de maintien 14 de fixer l'écran d'affichage 12 au boîtier de fixation 16.

Comme représenté sur la figure 2, le dispositif d'affichage selon l'invention comprend en outre entre le dos de l'écran d'affichage 12 et le boîtier de fixation 16 des moyens élastiques 20. Les moyens élastiques 20 sont maintenus en compression par les moyens de fixation 18 entre le boitier 16 et l'écran d'affichage 12.

Les moyens élastiques 20 sont configurés de sorte à assurer une cote désirée entre les premier et deuxième points de référence. En d'autre terme, les moyens élastiques sont configurés de sorte à minimiser l'écart entre la distance séparant les premier et deuxième points de référence et une cote désirée.

On entend par moyen élastique au sens de l'invention des moyens pouvant se déformer, selon au moins une direction, sous l'action des moyens de fixation avec les plots de maintien. Contrairement à des moyens rigides, les moyens élastiques selon l'invention se déforment lors de l'application d'une contrainte.

L'invention ne se limite pas à un matériau précis pour les moyens élastiques ; une gamme de matériaux dont le module élastique est assez grand pour être caractérisé d'élastique peut être utilisée. De même, une configuration particulière des moyens élastiques peut permettre d'assurer une déformation selon au moins une direction lors de l'application d'une contrainte.

Avantageusement, l'utilisation des moyens élastiques selon l'invention permet de contrôler avec précision l'écart entre les points de référence et une cote désirée. De plus, les moyens élastiques permettent de supprimer tout appui résiduel contre la façade avant de l'écran 13, protégeant ainsi l'écran d'affichage 12 de toutes détériorations ou de déformations de l'image dues au contact.

Les moyens élastiques 20 peuvent se présenter sous forme de plots élastomères et/ou de plots en silicone et/ou de ressorts en compression et/ou de rondelles élastiques métalliques.

Dans le mode de réalisation représenté sur la figure 2, les moyens élastiques sont disposées au niveau des plots de maintien 14 entre le dos de l'écran d'affichage 12 et le boîtier de fixation 16.

Non conforme à l'invention, il est possible de prévoir des moyens élastiques disposés entre le dos de l'écran d'affichage 12 et le boîtier de fixation 16 sans pour autant être disposés au niveau des plots de maintien 14.

De plus, dans un autre mode de réalisation le boîtier 16 ne comprend pas de plot de maintien, les moyens élastique peuvent être disposées directement entre le dos de l'écran d'affichage 12 et l'intérieur du boîtier 16, englobant ou non les plots de maintien 14.

De même, il est possible de prévoir que les moyens de fixation coopèrent avec les plots de maintien à l'aide d'au moins un élément intermédiaire. Les moyens élastiques peuvent alors être disposés entre le au moins un élément intermédiaire et le boîtier de fixation.

La figure 2 présente le dispositif d'affichage 10 avec un vitrage décor 40 en appui sur le boîtier 16. Avantageusement, l'utilisation des moyens élastiques 20 permet de contrôler l'écart « e » entre la surface d'affichage 13 de l'écran d'affichage 12 et le vitrage décor 40.

Cet écart provient entre autre des jeux des différentes pièces constitutif du dispositif d'affichage 10. L'utilisation des moyens élastique permet de rattraper les jeux et écarts de tolérances des différentes pièces du dispositif d'affichage 10 en limitant l'effort au niveau des moyens de fixation 18.

Sur le mode de réalisation représenté en figure 2, les moyens élastiques sont configurés de sorte à ce que l'écart « e » entre la surface d'affichage 13 de l'écran d'affichage 12 et le vitrage décor 40 soit sensiblement nul.

Ainsi, on peut compenser les jeux et écarts de tolérance de fabrication afin que la surface d'affichage 13 soit au plus près du vitrage 40, ce qui n'était pas possible lorsque l'écran d'affichage était simplement vissé à au boîtier de fixation 16.

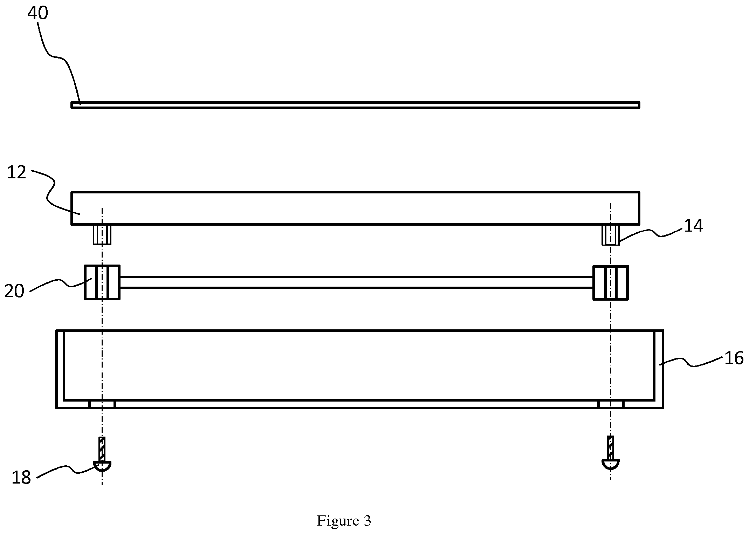

La figure 3 montre un second mode de réalisation selon l'invention dans lequel les moyens élastiques 20 sont des plots en silicone reliés entre eux sous forme d'un seul élément cadre.

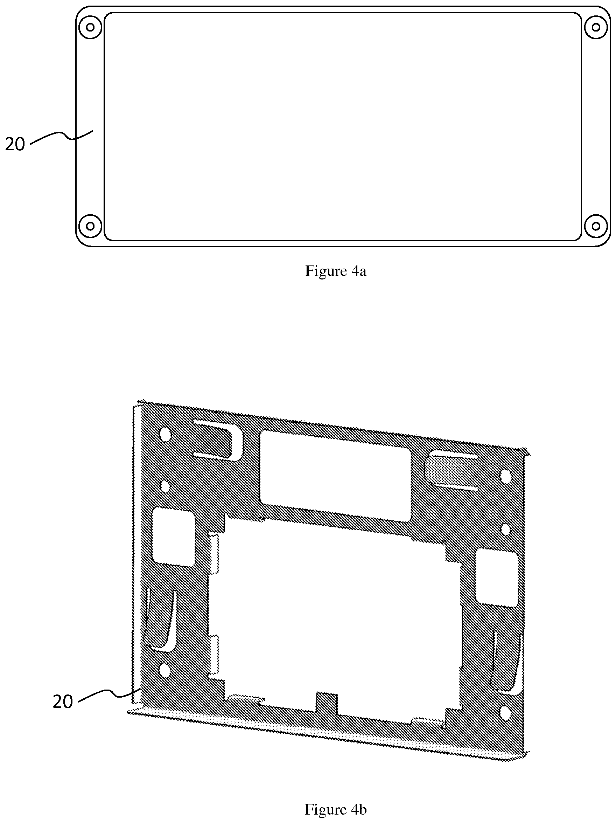

Avantageusement, une telle configuration des moyens élastiques permet de minimiser les opérations de pose lors du montage du dispositif d'affichage selon l'invention. Des moyens élastiques 20 de ce genre sont représentés en figure 4a.

La figure 4b représente un moyen élastique 20 selon un autre mode de réalisation de l'invention. Le moyen élastique 20 peut être sous la forme de pattes métalliques issues d'une tôle pliée.

D'autres moyens élastiques de géométrie différente sont envisageables, par exemple une plaque, nappe ou anneaux individuels. Aussi, d'autres matériaux élastiques permanents dans la gamme automobile peuvent être utilisés, tel que le silicone, les élastomères, le caoutchouc, des rondelles élastiques métalliques.

Le dispositif selon l'invention permet d'adapter la hauteur de l'assemblage du dispositif d'affichage 10 à l'aide d'un moyen élastique 20. L'écart « e » est adapté en fonction de la compression du moyen élastique entre les plots de maintien 14 de l'écran d'affichage 12 et le boîtier 16.

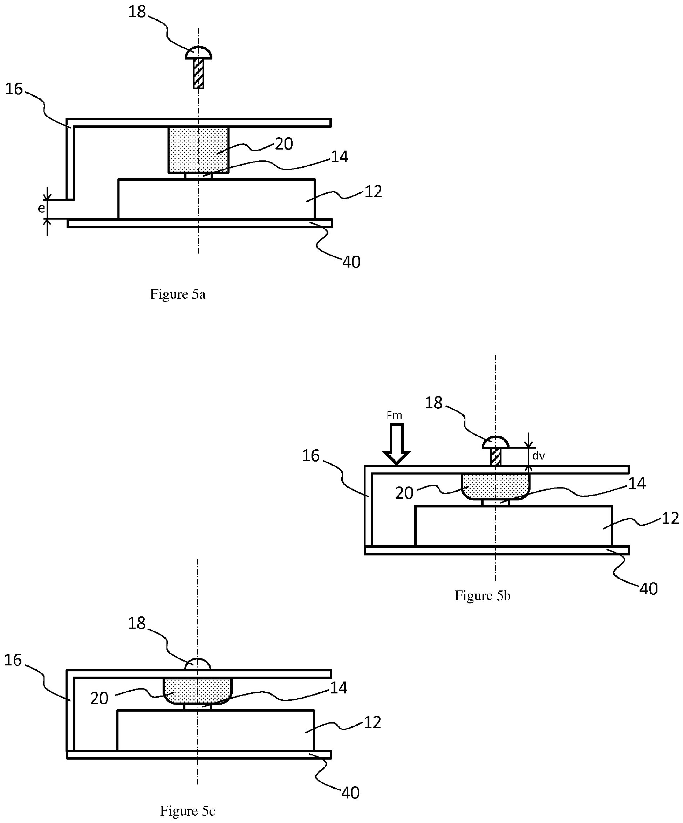

Un exemple de procédé de montage permettant de réduire l'écart « e » est illustré sur les figures 5a à 5c.

Sur les figures 5a à 5c, la phase de correction du l'écart « e » est schématisée pour représenter les interactions entre le boîtier 16, l'écran d'affichage 12, le vitrage 40 et les moyens élastiques 20.

La figure 5a représente le dispositif d'affichage lors du placement d'un moyen élastique 20 entre le dos de l'écran d'affichage 12 et le boîtier 16 au niveau des plots de maintien 14. L'écran d'affichage 12 est en contact avec le vitrage 40 tandis que le moyen élastique 20 est positionné au dos de l'écran d'affichage 12 entre les plots de maintien 14 et le boîtier 16.

Lors de l'étape suivante présentée sur la figure 5.b le moyen élastique est comprimé ou encore écrasé jusqu'au contact entre le boîtier de fixation 16 et du vitrage 40. On peut mesurer en continu ou encore ponctuellement, avant ou après obtention de la dimension ou compression recherchée.

Les mesures et les choix des moyens élastique peuvent se faire de façon manuelle ou robotisée assistée par ordinateur en chaine.

Avantageusement, l'écart « e » est ainsi supprimé.

Cette étape permet de rattraper tous les écarts de tolérance des différents éléments constituant le dispositif d'affichage.

Un moyen de fixation 18 tel qu'une vis dans le mode de réalisation présenté en figure 5b est placé sans vissage, et la longueur du filet en dehors du filetage est notée « dv ».

La figure 5c présente l'étape de vissage du moyen de fixation 18. Le vissage est précisément effectué selon la distance « dv », tout en maintenant la force de compression. Le contrôle de la distance « dv » peut se faire à l'aide d'une caméra, afin d'adapter le vissage à chaque dispositif étant donné que la distance « dv » varie selon les cotes d'assemblage des différents éléments. Le vissage peut aussi se s'arrêter quand le couple de vissage augmente brusquement, signalant la fin du vissage.

Finalement, la force de compression est retirée après le vissage de l'élément de fixation 18, laissant ainsi l'écran d'affichage fixé au boîtier de fixation et supprimant l'écart « e ».

Avantageusement, ce procédé permet de contenir toute la force de compression dans les moyens élastiques 20, réduisant ainsi la force de pression entre l'écran d'affichage 12 et le vitrage 40. Les contraintes mécaniques appliquées à l'écran d'affichage 12 sont donc principalement localisées dans les plots de maintien 14.

L'invention se rapporte également à une planche de bord d'un véhicule automobile comprenant un dispositif d'affichage selon l'invention.

L'invention n'est pas limitée aux modes de réalisation particuliers qui ont été décrits ci-dessus, de nombreuses variantes pouvant être conçues sans sortir de la portée définie par les revendications jointes. En particulier, le boitier 16 peut renferme d'autres éléments non représentés comme une carte électronique, qui participent ou pas à l'empilage.

## Revendications

1. Dispositif d'affichage destiné à l'habitacle d'un véhicule automobile, le dispositif d'affichage comprenant au moins:
- un écran d'affichage (12), l'écran d'affichage (12) comprenant au moins un premier point de référence,
- un boîtier de fixation (16) comprenant un deuxième point de référence,
- des moyens de fixation (18),
- l'écran d'affichage (12) étant fixé au boîtier (16) de fixation au moyen de moyens de fixation (18), et
**caractérisé en ce que** le dispositif d'affichage comprend des moyens élastiques (20) maintenus en compression par les moyens de fixation (18) entre le boîtier (16) et des plots de maintien (14) de l'écran d'affichage (12) de sorte d'une part, à assurer la cote désirée entre les premier et deuxième points de référence et d'autre part, à contenir toute la force de compression dans les moyens élastiques (20).

2. Dispositif d'affichage selon la revendication 1, dans lequel l'écran d'affichage est de type à cristaux liquides, par exemple de type TFT.

3. Dispositif d'affichage selon l'une des revendications 1 ou 2, dans lequel l'écran d'affichage comprend au moins trois plots de maintien (14) disposés au dos de l'écran d'affichage (12), l'écran d'affichage (12) étant fixé au boitier (16) par les plots de maintien et les moyens élastiques sont disposés entre l'écran d'affichage et le boîtier au niveau des plots de maintien.

4. Dispositif d'affichage selon l'une des revendications 1 ou 2, dans lequel l'écran d'affichage comprend au moins trois plots de maintien (14) disposés au dos de l'écran d'affichage (12), l'écran d'affichage (12) étant fixé au boitier (16) par les plots de maintien et les moyens de fixation coopèrent avec les plots de maintien au moyen d'au moins un élément intermédiaire et les moyens élastiques sont disposés entre le au moins un élément intermédiaire et le boîtier.

5. Dispositif d'affichage selon l'une quelconque des revendications précédentes dans lequel les moyens élastiques comprennent un cadre reliant entre eux lesdits moyens élastiques.

6. Dispositif d'affichage selon l'une quelconque des revendications précédentes dans lequel les moyens élastiques comprennent des plots élastomères et/ou des plots en silicone et/ou des ressorts de compression et/ou des rondelles élastiques métalliques et/ou des pattes élastiques métalliques.

7. Dispositif d'affichage selon l'une quelconque des revendications précédentes dans lequel les moyens de fixation sont des vis et/ou des cames et/ou de la colle.

8. Dispositif d'affichage selon l'une quelconque des revendications précédentes dans lequel l'écran d'affichage comprend au moins quatre plots de maintien.

9. Dispositif d'affichage selon l'une quelconque des revendications précédentes comprenant en outre une plaque de protection transparente disposée devant l'écran d'affichage.

10. Planche de bord d'un véhicule automobile comprenant un dispositif d'affichage selon l'une quelconque des revendications précédentes.

11. Procédé de montage d'un dispositif d'affichage selon l'une quelconque des revendications 1 à 9, comprenant les étapes successives suivantes :
- on place au moins un moyen élastique entre le dos de l'écran d'affichage (12) et le boitier (16),
- on comprime le moyen élastique de sorte à assurer la cote désirée entre les premier et deuxième point de référence,
- on fixe l'écran d'affichage au boitier (16),
- on retire la force de compression.

## Patentansprüche

1. Anzeigevorrichtung, die für den Fahrgastraum eines Kraftfahrzeugs bestimmt ist, wobei die Anzeigevorrichtung mindestens umfasst:
- einen Anzeigebildschirm (12), wobei der Anzeigebildschirm (12) mindestens einen ersten Bezugspunkt umfasst,
- ein Befestigungsgehäuse (16), das einen zweiten Bezugspunkt umfasst,
- Befestigungsmittel (18),
- wobei der Anzeigebildschirm (12) mittels von Befestigungsmitteln (18) an dem Befestigungsgehäuse (16) befestigt wird, und
**dadurch gekennzeichnet, dass** die Anzeigevorrichtung elastische Mittel (20) umfasst, die durch die Befestigungsmittel (18) zwischen dem Gehäuse (16) und Halteklötzen (14) des Anzeigebildschirms (12) zusammengedrückt gehalten werden, so dass zum einen das gewünschte Maß zwischen den ersten und zweiten Bezugspunkten gewährleistet wird und zum anderen die gesamte Druckkraft in den elastischen Mitteln (20) aufgenommen wird.

2. Anzeigevorrichtung nach Anspruch 1, bei welcher der Anzeigebildschirm vom Typ mit Flüssigkristallen ist, zum Beispiel vom Typ TFT.

3. Anzeigevorrichtung nach einem der Ansprüche 1 oder 2, bei welcher der Anzeigebildschirm mindestens drei Halteklötze (14) umfasst, die auf der Rückseite des Anzeigebildschirms (12) angeordnet sind, wobei der Anzeigebildschirm (12) an dem Gehäuse (16) durch die Halteklötze befestigt wird und die elastischen Mittel zwischen dem Anzeigebildschirm und dem Gehäuse auf Höhe der Halteklötze angeordnet sind.

4. Anzeigevorrichtung nach einem der Ansprüche 1 oder 2, bei welcher der Anzeigebildschirm mindestens drei Halteklötze (14) umfasst, die auf der Rückseite des Anzeigebildschirms (12) angeordnet sind, wobei der Anzeigebildschirm (12) an dem Gehäuse (16) durch die Halteklötze befestigt wird und die Befestigungsmittel mit den Halteklötzen mittels mindestens eines Zwischenelements zusammenwirken und die elastischen Mittel zwischen dem mindestens einen Zwischenelement und dem Gehäuse angeordnet sind.

5. Anzeigevorrichtung nach einem der vorhergehenden Ansprüche, bei der die elastischen Mittel einen Rahmen umfassen, der die elastischen Mittel untereinander verbindet.

6. Anzeigevorrichtung nach einem der vorhergehenden Ansprüche, bei der die elastischen Mittel Elastomerklötze und/oder Silikonklötze und/oder Druckfedern und/oder metallische Federscheiben und/oder metallische elastische Laschen sind.

7. Anzeigevorrichtung nach einem der vorhergehenden Ansprüche, bei der die Befestigungsmittel Schrauben und/oder Zapfen und/oder Klebstoff sind.

8. Anzeigevorrichtung nach einem der vorhergehenden Ansprüche, bei welcher der Anzeigebildschirm mindestens vier Halteklötze umfasst.

9. Anzeigevorrichtung nach einem der vorhergehenden Ansprüche, die ferner eine transparente Schutzplatte umfasst, die vor dem Anzeigebildschirm angeordnet ist.

10. Instrumentenbrett eines Kraftfahrzeugs, das eine Anzeigevorrichtung nach einem der vorhergehenden Ansprüche umfasst.

11. Verfahren zur Montage einer Anzeigevorrichtung nach einem der Ansprüche 1 bis 9, das die folgenden aufeinander folgenden Schritte umfasst:
- man platziert mindestens ein elastisches Mittel zwischen der Rückseite des Anzeigebildschirms (12) und dem Gehäuse (16),
- man drückt das elastische Mittel so zusammen, dass das gewünschte Maß zwischen den ersten und zweiten Bezugspunkten gewährleistet wird,
- man befestigt den Anzeigebildschirm an dem Gehäuse (16),
- man nimmt die Druckkraft zurück.

## Claims

1. Display device intended for the interior of a motor vehicle, the display device comprising at least:
- a display screen (12), the display screen (12) comprising at least one first reference point,
- a fixing housing (16) comprising a second reference point,
- fixing means (18),
- the display screen (12) being fixed to the fixing housing (16) by means of fixing means (18), and **characterized in that** the display device comprises elastic means (20) kept compressed by the fixing means (18) between the housing (16) and securing studs (14) of the display screen (12) so as, on the one hand, to ensure the desired dimension between the first and second reference points and, on the other hand, to contain all the compression force in the elastic means (20).

2. Display device according to Claim 1, wherein the display screen is of liquid crystal type, for example of TFT type.

3. Display device according to either of Claims 1 and 2, wherein the display screen comprises at least three securing studs (14) disposed on the back of the display screen (12), the display screen (12) being fixed to the housing (16) by the securing studs and the elastic means are disposed between the display screen and the housing at the securing studs.

4. Display device according to either of Claims 1 and 2, wherein the display screen comprises at least three securing studs (14) disposed on the back of the display screen (12), the display screen (12) being fixed to the housing (16) by the securing studs and the fixing means cooperate with the securing studs by means of at least one intermediate element and the elastic means are disposed between the at least one intermediate element and the housing.

5. Display device according to any one of the preceding claims, wherein the elastic means comprise a frame linking said elastic means to one another.

6. Display device according to any one of the preceding claims, wherein the elastic means comprise elastomer studs and/or silicone studs and/or compression springs and/or metal elastic washers and/or metal elastic lugs.

7. Display device according to any one of the preceding claims, wherein the fixing means are screws and/or cams and/or glue.

8. Display device according to any one of the preceding claims, wherein the display screen comprises at least four securing studs.

9. Display device according to any one of the preceding claims, further comprising a transparent protection plate disposed in front of the display screen.

10. Dashboard of a motor vehicle comprising a display device according to any one of the preceding claims.

11. Method for mounting a display device according to any one of Claims 1 to 9, comprising the following successive steps:
- placing at least one elastic means between the back of the display screen (12) and the housing (16),
- compressing the elastic means so as to ensure the desired dimension between the first and second reference points,
- fixing the display screen to the housing (16),
- removing the compression force.
